(19) Europäisches Patentamt
European Patent Office
Office européen des brevets

(11) **EP 2 456 325 B1**

(12) **EUROPEAN PATENT SPECIFICATION**

(45) Date of publication and mention
of the grant of the patent:
**18.03.2020  Bulletin 2020/12**

(21) Application number: **10737439.9**

(22) Date of filing: **22.07.2010**

(51) Int Cl.:
*A23L 29/30* (2016.01)     *A23L 7/117* (2016.01)
*A23L 7/10* (2016.01)      *A23L 7/13* (2016.01)
*A23L 19/18* (2016.01)

(86) International application number:
**PCT/US2010/042848**

(87) International publication number:
**WO 2011/011571 (27.01.2011 Gazette 2011/04)**

(54) **RICE FLOUR COMPOSITIONS**

REISMEHLZUSAMMENSETZUNGEN

COMPOSITIONS DE FARINE DE RIZ

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority:  **24.07.2009  US 228222 P**

(43) Date of publication of application:
**30.05.2012  Bulletin 2012/22**

(73) Proprietor: **Kellogg Europe Trading Limited**
**Dublin 2 (IE)**

(72) Inventors:
• **VILLAGRAN, Maria, Dolores Martinez-Serna Mason**
**Ohio 45040 (US)**
• **KUMAR, Yashwant**
**Chaoyang District, Beijing, 1000 (CN)**
• **KONG, Consuelo**
**Cincinnati**
**Ohio 45232 (US)**

• **BRUNO, David, Joseph, Jr.**
**Hamilton**
**Ohio 45011 (US)**
• **BOIANO, Anthony, John**
**Deerfield Township**
**Ohio 45039 (US)**

(74) Representative: **Plasseraud IP**
**66, rue de la Chaussée d'Antin**
**75440 Paris Cedex 09 (FR)**

(56) References cited:
**WO-A1-99/51111          WO-A2-2006/135714**
**US-A1- 2005 053 715     US-A1- 2006 286 271**
**US-A1- 2008 182 004**

• **KADAN R S ET AL: "FUNCTIONAL PROPERTIES OF EXTRUDED RICE FLOURS" JOURNAL OF FOOD SCIENCE, WILEY-BLACKWELL PUBLISHING, INC, US LNKD-DOI:10.1111/J.1365-2621.2003.TB12311.X, vol. 68, no. 5, 1 January 2003 (2003-01-01), pages 1669-1672, XP009040029 ISSN: 0022-1147**

EP 2 456 325 B1

**Description**

FIELD

The present invention relates to a dry blend comprising a rice flour composition and to doughs comprising the dry blend.

BACKGROUND

Fabricated snack products prepared from doughs comprising starch-based materials are well-known in the art. These doughs typically comprise dehydrated potato products such as dehydrated potato flakes, granules, and/or flanules. The doughs can also comprise a number of other starch-based ingredients, such as wheat, corn, rice, tapioca, barley, cassava, oat, sago, and potato starches, as well as flours. These other starch-based ingredients are typically included in the doughs in lesser quantities than the dehydrated potato products.

The advantages of preparing such food products, for example, potato snacks, from a dough rather than from sliced, whole potatoes include homogeneity or uniformity in the end food products and the ability to more closely control the separate steps involved in the preparation of the food products. Additionally, preparing fabricated snack products from dough provides the flexibility to formulate such products according to the availability of raw materials and to consumer desires for various textures and flavors.

Rice flour is a material that is available globally. Its characteristic flavor, which can be described as clean and neutral makes it suitable for use in corn, potato, rice and other snacks. Furthermore, rice flour is suitable for use as the primary ingredient for making both low intensity flavored snacks, such as herbal flavors or sweet flavors, as well as high-intensity flavored seasoned snacks, because the rice flour's neutral flavor does not compete with that of the seasoning.

Rice also provides the flexibility to be partially or fully gelatinized by using different processes. Some of these different processes include parboiling, steam cooking, quick process, extrusion, and combinations and mixtures of these.

Although rice flour can be included in fabricated snack doughs, its inclusion can lead to processing and product quality issues, which are not easily solved. For example, the addition of rice flour can result in inelastic doughs that are difficult to hydrate, cook, dry, mill, or fry. Furthermore, the fabricated snack products resulting from these doughs can be too soft, with a cracker-like texture, have an undesirable raw taste or can be too hard and dense. These characteristics are, in part, caused by the difficulty in cooking rice flour, as rice starch has one of the highest gelatinization temperatures among the starches (72°C) available for use in snacks. That is, such high gelatinization temperatures can prevent the starch in rice flour from being cooked completely to avoid a raw taste and 'tooth packing' of the resulting products.

In cases where the product expansion cannot be controlled by constrained baking or frying, the properties of rice can be used to obtain a consistent and uniform product expansion. Typically, parboiled cooked rice flours display different functionality than rice flour cooked with the quick cooking process or pre-gelatinized rice flour. The fabricated snack products resulting from doughs made with the pre-gelatinized rice flour can show a consistent product expansion even when frying or baking is done in semi-constrained systems.

Substantial benefits can exist by increasing the amount of rice flour in fried snack products. It has surprisingly been found that dough based on rice flour absorbs less fat upon frying than dough based on potato and other flours. This benefit, however, is not necessarily proportional to the amount of rice flour used. Likewise, in most areas of the world, rice flour is more readily available and less expensive than potato flour. It has also been found that a blend of rice flours with specific functionality can absorb significantly lower water content during the dough making process, which in turn reduces the finished product fat content. Also, it has been found that specific chemical modifications of rice starch have a unique functionality in snack formulations, providing additional product crispiness and facilitating the dough-making process. These advantages can make rice ingredients a desirable raw material for the manufacture of snacks.

However, as the concentration of standard rice flour in the dough increases, the processing problems associated with rice flour may also increase dramatically. Processing issues include weak and dry dough that requires high water levels to process. Increasing the water content of the dough can increase the fat content of the final product. Adding 10-20%, by weight, of standard rice flour to potato flour based dough requires a certain degree of process manipulation to make an acceptable snack product. If the rice flour is increased to, for example, 70-90%, by weight, the processing problems can be drastically increased, and it can be very difficult to reduce the water required to form the dough. And if standard rice flour is used in such high quantities, the resulting snack product can have a substantially dense texture and poor mouth feel when compared to a potato based snack. More specifically, potato based snack products have a fast melt down that yields a light and crispy texture, whereas rice based snack products have either a slower melt down with a glassy, hard texture, such as found in Japanese crackers, or a soft, chewy, and tooth packing texture, such as found in rice cakes. Consumers have grown accustomed to the crispy texture and eating quality of potato, corn, and wheat based snacks, and breaking from that established equity can be difficult.

Also, it has been found that specific cooking and/or process conditions of rice flours can result in unique functionality for fabricated snacks, such as for example in the case on semi-constrained frying or baking.

The use of rice flours, such as those disclosed in US Publication No. 20050053715 and US Publication No. 2006-0286271, in processing lines with limited mechanical strength mill rolls and mixers, as well as semi-constrained fryers, which is one example of the current technology commercially available for the manufacture of fabricated snacks for developing countries, can present great challenges, related to processing as well as product challenges. The rice flours having compositions as disclosed in US Publication No. 2005-0053715 and US Publication No. 2006-0286271 can result in tough dough sheets that can cause damage of the equipment, such as breakage of mechanical parts of the mill rolls. These issues can be due to the inability of the starch to hydrate properly during mixing when the mixer runs at lower speed. The use of existing rice flours in commercially used fabricated snack chip manufacturing lines, such as semi-constrained fryers (single mold), also can have a negative effect in the product, such as uneven expansion, which can also result in further process issues, such as inability to shingle (align to be stacked) and pack in an orderly stacked.

Hence, a need exists for ingredients, formulae and processes for making fabricated snack products with relatively high concentrations of rice flour while maintaining certain textural qualities that consumers prefer. And a need exists for a rice crisp product that is made from a sheet of dough or extruded, and then fried, partially fried and then baked, or baked.

## SUMMARY

The scope of the invention is defined by the claims. Any subject-matter falling outside the scope of the claims is provided for information purposes only.

## DETAILED DESCRIPTION

## A. DEFINITIONS

As used herein, "broken pieces of rice" refers to kernels of rice that are less than three-fourths of the whole kernel.

As used herein, "gelatinized" includes any type of gelatinization including fully gelatinized, partially gelatinized, and pre-gelatinized starches. Gelatinized rice flours can include, but are not limited to, parboil, cooked, partially cooked, and extruded rice flours.

As used herein, "pre-gelatinized rice flour" refers to rice flour that contains starch that is substantially gelatinized by achieving substantial starch swelling.

As used herein, "rice" includes any varieties or types of rice including, but not limited to, white, brown, black, and wild. "Rice" also includes any rice with any natural or enhanced nutritional content.

As used herein, "extruded rice" refers to rice that has been passed through an extruder.

As used herein, "cooked rice" refers to rice that has been parboiled or otherwise cooked or partially cooked before or after grinding into flour.

As used herein, "parboiled rice" refers to rice that has gone through a cooking process prior to hull removal. Parboiled rice is starch containing and comprise a high level of gelatinized starch.

As used herein, "uncooked rice" refers to rice that has not been cooked in any manner.

As used herein, "short grain rice" refers to rice that has a short, plump, round-like kernel having a length ranging from about 1 to about 2 times the width and having a total amylose content ranging from about 0% to about 13%.

As used herein, "medium grain rice" refers to rice that has a length ranging from about 2 to about 3 times the width and having an amylose content ranging from about 14% to about 19%.

As used herein, "long grain rice" refers to rice that has a long, slender kernel having a length ranging from about 3.5 to about 5 times the width and having a total amylose content ranging from about 20% to about 25%.

As used herein, the term "fabricated" refers to food products made from doughs comprising flour, meal, and/or starch, such as those derived from tubers, grains, legumes, cereals, or mixtures thereof.

As used herein, "native starch" refers to starch that has not been pre-treated or cooked in any way and includes but is not limited to hybrid starches.

As used herein, "dehydrated potato products" includes, but is not limited to, potato flakes, potato flanules, potato granules, potato agglomerates, any other dehydrated potato material, and mixtures thereof.

As used herein, "sheetable dough" is a cohesive dough capable of being placed on a smooth surface and rolled to the desired final thickness without tearing or forming holes. Sheetable dough can also include dough that is capable of being formed into a sheet through an extrusion process.

As used herein, "starch" refers to a native or an unmodified carbohydrate polymer having repeating anhydroglucose units derived from materials such as, but not limited to, wheat, corn, tapioca, sago, rice, potato, oat, barley, and amaranth, and also refers to modified starch including but not limited to hydrolyzed starches such as maltodextrins, high amylose corn maize, high amylopectin corn maize, pure amylose, chemically substituted starches, crosslinked starches, and other modifications including but not limited to chemical, physical, thermal or enzymatic and mixtures thereof.

As used herein, "starch-based flour" refers to high polymeric carbohydrates composed of glucopyranose units, in either natural, dehydrated (e.g., flakes, granules, meal) or flour form. Starch-based flour can include, but is not limited to, potato flour, potato granules, potato flanules, potato flakes, corn flour, masa corn flour, corn grits, corn meal, rice flour, buckwheat flour, oat flour, bean flour, barley flour, tapioca, and mixtures thereof. For example, the starch-based flour can be derived from tubers, legumes, grain, or mixtures thereof.

As used herein, the term "added water" refers to water that has been added to the dry dough ingredients. Water that is inherently present in the dry dough ingredients, such as in the case of the sources of flours and starches, is not included in the "added water."

As used herein, the term "emulsifier" refers to emulsifier that has been added to the dough ingredients. Emulsifiers that are inherently present in the dough ingredients, such as in the case of the potato flakes (where emulsifier is used as a processing aid during manufacturing), are not included in the term "emulsifier."

As used herein "rapid viscosity unit" (RVU) is an arbitrary unit of viscosity measurement roughly corresponding to centipoise, as measured using the RVA analytical method herein (12 RVU equal approximately 1 centiPoise).

The terms "fat" and "oil" are used interchangeably herein unless otherwise specified. The terms "fat" or "oil" refer to edible fatty substances in a general sense, including natural or synthetic fats and oils consisting essentially of triglycerides, such as, for example soybean oil, corn oil, cottonseed oil, sunflower oil, palm oil, coconut oil, canola oil, fish oil, lard, and tallow, which may have been partially or completely hydrogenated or modified otherwise, as well as non-toxic fatty materials having properties similar to triglycerides, herein referred to as non-digestible fats, which materials may be partially or fully indigestible. Reduced calorie fats and edible non-digestible fats, oils or fat substitutes are also included in the term.

The term "non-digestible fat" refers to those edible fatty materials that are partially or totally indigestible, e.g., polyol fatty acid polyesters, such as OLEAN™. The preferred non-digestible fats are fatty materials having properties similar to triglycerides, such as sucrose polyesters. These preferred non-digestible fats are described in U.S.. Patent No. 5,085,884, issued February 4, 1992 to Young et al. and U.S. Patent No. 5,422,131, issued June 6, 1995 to Elsen et al. An especially preferred brand of non-digestible fats is sold under the tradename OLEAN™

By the term "dry blend" it is meant herein the dry raw material mixed together prior to processing of the materials so mixed.

The list of sources, ingredients, and components as described hereinafter are listed such that combinations and mixtures thereof are also contemplated and within the scope herein.

It should be understood that every maximum numerical limitation given throughout this specification includes every lower numerical limitation, as if such lower numerical limitations were expressly written herein. Every minimum numerical limitation given throughout this specification will include every higher numerical limitation, as if such higher numerical limitations were expressly written herein. Every numerical range given throughout this specification will include every narrower numerical range that falls within such broader numerical range, as if such narrower numerical ranges were all expressly written herein.

Referenced herein may be trade names for components including various ingredients utilized in the present disclosure. The inventors herein do not intend to be limited by materials under any particular trade name. Equivalent materials (e.g., those obtained from a different source under a different name or reference number) to those referenced by trade name may be substituted and utilized in the descriptions herein.

## B. <u>RICE FLOUR COMPOSITIONS</u>

One embodiment of the present invention provides a dry blend for making a fabricated snack product, wherein said dry blend comprises from 15% to 100% of a rice flour composition consisting of 100% pre-gelatinized rice flour and having

a) a Water Absorption Index of from 6.0 to 7.5 and
b) a Peak Viscosity of from 350 RVU to 500 RVU.

The rice flour compositions, when used in fabricated snack doughs, result in cohesive doughs having the desired level of elasticity and finished fabricated snack products having the desired organoleptic properties.

Long grain, medium grain, short grain, and sweet or grain rice can all be made into rice flour. In addition, rice flour can be made from broken pieces or whole pieces of rice. Rice flours made from these different types of rice vary in water absorption index, peak viscosity, final viscosity, and total amylose content. Furthermore, the rice is partially or fully pre-cooked, parboiled, or pre-gelatinized in any other way prior to, or after, processing into rice flour, and the rice flour properties are further modified.

In one embodiment, the composition comprises long grain rice flour, medium grain rice flour, short grain rice flour, or combinations thereof. Furthermore, the rice flour is pre-gelatinized in order to effect the desired starch degradation in the rice flour.

Mixing together the desired quantities of various rice flours can be used to make the desired rice flour composition. This mixing can be accomplished by any suitable means such as, but not limited to, mixing the rice grains before milling, or mixing the flours together after milling.

Non-limiting examples of food products can include fabricated snack products, extruded products, baked snacks, tortilla based snacks, sauces, coatings for foods, dog foods, dog biscuits, baby foods, and breads. The composition of this flour can also be obtained from other grains such as corn, barley, sorghum, wheat, quinoa, and amaranth.

The rice flour composition comprises a rice flour that has a water absorption index (WAI) of from about 6.0 to about 7.5, and all ranges therebetween. The rice flour has a Peak Viscosity (in rapid viscosity units, RVU) from about 350 RVU to about 500 RVU, or from about 400 RVU to about 450 RVU, and all ranges therebetween. In other embodiments, the rice flour can have both the water absorption index and the Peak Viscosity as described herein. The dry blend comprises from about 15% to about 100% rice flour composition, or from about 20% to about 85% rice flour composition, and all ranges therebetween. The dry blend can comprise from about 15% to about 50%, or from about 20% to about 45%, rice flour composition, and all ranges therebetween.

The dry blend can be used, for example, for making dough that can be rolled into sheets that have a sheet strength of from about 200 gf to about 600 gf, and all range therebetween. In one embodiment, the dry blend can comprise the rice flour composition as described herein and other ingredients as described herein.

In one embodiment herein, the rice flour composition can have a total amylose content ranging from about 16% to about 25%. In an embodiment comprising long grain rice flour, the rice flour composition can have a total amylose content ranging from about 20% to about 25%. In an embodiment comprising medium grain rice flour, the composition can have a total amylose content ranging from about 16% to about 19%.

In one embodiment, extrusion can be used to process the gelatinized rice flour. Extrusion provides the cooking conditions required for the starch of the rice flour to completely cook, resulting in complete gelatinization and high levels of dextrinization of the starch--i.e., starch degradation. The use of extrusion to prepare the rice flours for embodiments of this invention can assist in helping to remove the raw starch taste or the powdery starchy aftertaste and the uncontrolled and excessive expansion in the finished product.

In one embodiment, the gelatinized rice flour can be selected from the group consisting of partially precooked long grain rice flour, fully cooked long grain rice flour, fully cooked medium grain rice flour, parboiled rice flour, and mixtures thereof. In another embodiment, the gelatinized rice flour is made from gelatinized broken, long grain rice pieces.

In one embodiment, an emulsifier can be added to the gelatinized rice flour as a processing aide to complex the free amylose generated during cooking and/or milling. For example, monoglycerides can be added at a level ranging from about 0.2 to about 0.7%, and preferably from about 0.3% to about 0.5% (on a dry solids basis).

In one embodiment, the rice grain can be milled into flour, dispersed or mixed with water, and drum dried, where most of the gelatinization or cooking occurs. After drying, the pre-gelatinized rice flour can be ground and sieved for a specific particular size distribution. In another embodiment, whole grain rice flour can be used.

Thus, in one embodiment, the rice grain can be typically cleaned and made into rice flour. Next, the rice flour can be mixed with water. Water can be added with the rice sufficient to achieve full, complete hydration, in one embodiment, so that substantial gelatinization of the rice during heating occurs, as described herein. Hydration can occur when water reaches the surface of the starch within the rice. In one embodiment, water can be added with the rice to from about 25% to about 80%, or from about 40% to about 70%, or from about 55% to about 65%, or about 60%, by weight water, to form a slurry for dehydration. In one embodiment, the water can be at a temperature of from about 40°C to about 70°C. The refractive index (Brume scale) can be used to indirectly determine the concentration. In one embodiment, the rice flour can be mixed with water, as described above, in a batch process, wherein the mixing can occur for from about 1 to about 60 minutes, or from about 10 to about 40 minutes, or from about 15 to about 30 minutes, or about 20 minutes. In one embodiment, a slurry can be formed. In one embodiment, the slurry can then be dried in a drum drier and then ground into pre-gelatinized flour. Other non-limiting examples of drying of the slurry can be spray drying, air lift dryers, or steam cookers. Drying of the slurry can then be performed. Drying can be performed, resulting in a pre-gelatinized rice flour composition of from 5 to from 15%, or from about 6% to about 12%, or from 8% to about 10% water, by weight. In one embodiment, a drum dryer can be used. The slurry can be added to the drum dryer, where the temperature of the drum dryer can be at about 180°C. In one embodiment, to reach a water content as described herein, the speed and pressure of the drum dryer can be adjusted as appropriate and as within the knowledge of one of ordinary skill in the art.

After drying, the dried rice flour can be ground, such as is known to those of ordinary skill in the art. The rice flour can be ground to a wide range of particle size distribution. In one embodiment, the rice flour can have a particle size distribution such that about 35% of the flour remains on a US #100 mesh. In another embodiment, the rice flour can have a particle size distribution wherein from about 5% to about 30% remains on a 60 mesh screen, from about 15% to about .50% remains on a 100 mesh screen, or from about 20% to about 60% remains on a 200 mesh screen. In one embodiment, particle size distribution of the rice flour can help to ensure proper hydration during mixing. Also, the particle size distribution can affect texture: large particles in the rice flour can contribute to slow melting and tooth packing.

C. FABRICATED SNACK PRODUCT PREPARATION

Although the use of the dry blend comprising the rice flour compositions will be described primarily in terms of a fabricated snack product, it should be readily apparent to one skilled in the art that the dry blend of the present invention can be used in the production of any suitable food products. For instance, it can be used to produce food products such as extruded products, breads, sauces, crackers, fried snacks, fruit and vegetable snacks, baked or dried snacks, coatings for fried foods, baby foods, dog foods, dog biscuits and any other suitable food product. The production of a fabricated snack product is set forth in detail below for one embodiment of the present invention.

1. DOUGH FORMULATION

Dough formulations of the embodiments of the present invention comprise a dry blend and added water. The doughs can comprise from about 50% to about 85% dry blend and from about 15% to about 50% added water. The doughs can further comprise optional ingredients.

a. DRY BLEND

Doughs of embodiments of the present invention comprises from 50% to 85% dry blend, or from about 60% to about 75% dry blend, and all ranges therebetween.

The dry blend comprises from 15% to 100%, or from about 15% to about 50%, or even from about 20% to about 45%, rice flour composition as described above, and all ranges therebetween, with the balance being other ingredients, such as other starch materials, such as starch and/or flour. Suitable sources of other starch material include tapioca, oat, wheat, rye, barley, corn, masa, cassena, non-masa corn, peanut, dehydrated potato products, and combinations and mixtures thereof. Non-limiting examples include dehydrated potato flakes, potato granules, potato flanules, mashed potato materials, dried potato products, acetylated rice, parboiled rice, corn meal, modified starches, hydrolyzed starches, wheat starch, and combinations and mixtures thereof. These other starch materials can be blended to make snacks of different compositions, textures, and flavors. Furthermore, the balance of the dry blend can comprise one or more components including but not limited to, protein sources, fiber, minerals, vitamins, colorants, flavors, fruits, vegetables, seeds, herbs, and/or spices.

In one embodiment, the dry blend can have a Final Viscosity ranging from about 90 RVU to about 300 RVU, or from about 100 RVU to about 250 RVU, or from about 100 RVU to about 200 RVU, and all ranges therebetween. All combinations of WAI, Peak Viscosity, and/or Final Viscosity are also envisioned.

b. ADDED WATER

Dough compositions of embodiments of the present invention comprises from 15% to 50% added water, or from about 20% to about 40%, or from about 30% to about 40% added water, and all ranges therebetween. If optional ingredients, such as maltodextrin or corn syrup solids, juices, concentrates, are added as a solution or syrup, the water in the syrup or solution is included as added water. The amount of added water also includes any water used to dissolve or disperse ingredients.

c. OPTIONAL INGREDIENTS

Any suitable optional ingredient can be added to the doughs of the present invention. Such optional ingredients can include, but are not limited to, gum, reducing sugar, emulsifier, and mixtures thereof. Optional ingredients can be included at a level ranging from about 0% to about 50% or from about 0% to about 40%, by weight in the dough, and all ranges therebetween. Examples of suitable gums can be found in U.S. Patent No. 6,558,730, issued May 6, 2003, to Gizaw et al.

In one embodiment, a reducing sugar can be added to the dough. While the reducing sugar content can be dependent upon that of the potatoes that were employed to prepare the dehydrated potato product, the amount of reducing sugar in the fabricated snack products can be controlled by adding suitable amounts of a reducing sugar such as maltose, lactose, dextrose, or mixtures thereof to the dough. The dry blend of the present invention can contain from 0% to about 20%, or from 0% to about 10%, or from 0% to about 7.5%, by weight, maltodextrin, and all ranges therebetween.

In one embodiment, an ingredient that can be added to the dough to aid in its processability is emulsifier. An emulsifier can be added to the dough composition prior to sheeting the dough. The emulsifier can be dissolved in a fat or in a polyol fatty acid polyester such as Olean™. Suitable emulsifiers include lecithin, mono- and diglycerides, diacetyl tartaric acid esters and propylene glycol mono- and diesters and polyglcerol esters. Polyglycerol emulsifiers such as monoesters of hexaglycerols can be used. Embodiments of certain monoglycerides that can be used are sold under the trade names of Dimodan available form Danisco®, New Century, Kansas and DMG 70, available from Archer Daniels Midlands Company, Decatur, Illinois.

When calculating the level of optional ingredients according to the present invention, that level of optional ingredient that may be inherent in the rice flour and dehydrated potato products is not included. The levels of materials that is added over and above that level inherently present in the rice flour is used in the calculation.

2. DOUGH PREPARATION

The doughs of the present invention can be prepared by any suitable method for forming sheetable doughs. In one embodiment, a loose, dry dough can be prepared by thoroughly mixing together the ingredients using conventional mixers. In one embodiment, a pre-blend of the wet ingredients, such as for example added water, and a pre-blend of the dry ingredients, such as the dry blend, can be prepared; the wet pre-blend and the dry pre-blend can then mixed together to form the dough. In one embodiment, Hobart® mixers can be used for batch operations. In one embodiment, Turbulizer® mixers can be used for continuous mixing operations. Alternatively, extruders can be used to mix the dough and to form sheets or shaped pieces.

a. SHEETING

Once prepared, the dough can then be formed into a relatively flat, thin sheet. Any method suitable for forming such sheets from starch-based doughs can be used. For example, the sheet can be rolled out between two counter rotating cylindrical rollers to obtain a uniform, relatively thin sheet of dough material. Any conventional sheeting, milling, and gauging equipment can be used. The mill rolls can be heated to from about 90°F (32°C) to about 135°F (57°C). In one embodiment, the mill rolls can be kept at two different temperatures, with the front roller being hotter than the back roller. The dough can also be formed into a sheet by extrusion.

Doughs of embodiments of the present invention can be formed into a sheet having a thickness ranging from about 0.015 to about 0.10 inches (from about 0.038 to about 0.25 cm), or to a thickness ranging from about 0.019 to about 0.05 inches (from about 0.048 to about 0.127 cm), or even to a thickness from about 0.02 inches to about 0.03 inches (0.051 to 0.076 cm).

Dough sheets of embodiments of the present invention can have a sheet strength of from about 180 gf to about 600 gf, or from about 200 gf to about 450 gf, or from about 250 gf to about 350 gf. Moreover, the dough of embodiments of the present invention can be very strong even when sheeted to very low thickness. Because of this high sheet strength, the present rice flour composition can be an excellent carrier for food pieces in the dough, for example, pieces of fruit, vegetables, whole grains, nuts and the like.

The dough sheet can then be formed into snack pieces of a predetermined size and shape. The snack pieces (not part of the invention) can be formed using any suitable stamping or cutting equipment. The snack pieces can be formed into a variety of shapes. For example, the snack pieces can be in the shape of ovals, squares, circles, a bowtie, a star wheel, or a pin wheel. The 30 pieces can be scored to make rippled chips as described by Dawes et al. in PCT Application No. PCT/US95/07610, published January 25, 1996 as WO 96/01572.

b. COOKING

After the snack pieces are formed, they can be cooked until crisp to form fabricated snack products. The snack pieces can be fried, for example, in a fat composition comprising digestible fat, non-digestible fat, or mixtures thereof. For best results, clean frying oil can be used. The free fatty acid content of the oil can be maintained at less than about 1%, or even less than about 0.3%, in order to reduce the oil oxidation rate. Any other method of cooking or drying the dough, such as high temperature extrusion, baking, microwave heating, or combination is also acceptable.

The frying oil can have less than about 30% saturated fat, or less than about 25%, or less than about 20%. This type of oil can improve the lubricity of the finished fabricated snack products such that the finished fabricated snack products have an enhanced flavor display. The flavor profile of these oils also can enhance the flavor profile of topically seasoned products because of the oils' lower melting point. Non-limiting examples of such oils include sunflower oil containing medium to high levels of oleic acid.

The snack pieces can be fried in a blend of non-digestible fat and digestible fat. In one embodiment, the blend can comprise from about 20% to about 90% non-digestible fat and from about 10% to about 80% digestible fat, or from about 50% to about 90% non-digestible fat and from about 10% to about 50% digestible fat, or from about 70% to about 85% non-digestible fat and from about 15% to about 30% digestible fat. Other ingredients known in the art can also be added to the edible fats and oils, including antioxidants such as TBHQ, tocopherols, ascorbic acid, chelating agents such as citric acid, and anti-foaming agents such as dimethylpolysiloxane.

The snack pieces can be fried at temperatures of from about 275°F (135°C) to about 420°F (215°C), or from about 300°F (149°C) to about 410°F (210 °C), or from about 350°F (177°C) to about 400°F (204°C) for a time sufficient to form a product having about 6% or less moisture, or from about 0.5% to about 4%, or from about 1% to about 3% moisture. The frying time can be controlled by the temperature of the frying fat and the starting water content of the dough, which can be determined by one skilled in the art.

The snack pieces can be fried in oil using a continuous frying method and can be constrained or semi-constrained during frying. This constrained frying method and apparatus is described in U.S. Patent No. 3,626,466 issued December 7, 1971 to Liepa. The shaped, constrained or semi-constrained snack pieces can be passed through the frying medium until they are fried to a crisp state with a final moisture content of from about 0.5% to about 4%, or from about 1% to about 2.5%.

Any other method of frying, such as continuous frying or batch frying of the snack pieces in a non-constrained mode, is also acceptable. For example, the snack pieces can be immersed in the frying fat on a moving belt or basket. Likewise, frying can occur in a semi-constrained process. For example, the fabricated snack pieces can be held between two belts while being fried in oil.

Oils with characteristic flavor or highly unsaturated oils can be sprayed, tumbled or otherwise applied onto the fabricated snack products after frying. In one embodiment, triglyceride oils and non-digestible fats can be used as a carrier to disperse flavors and can be added topically to the fabricated snack products. These include, but are not limited to, butter flavored oils, natural or artificial flavored oils, herb oils, and oils with potato, garlic, or onion flavors added. This topical addition can allow for the introduction of a variety of flavors without having the flavor undergo browning reactions during the frying. This method can be used to introduce oils which would ordinarily undergo polymerization or oxidation during the heating necessary to fry the snacks.

The finished products (not part of the invention) can have a lighter and crispier texture than typical potato snacks due to the rice flour added into the formula. The rice flour can be used for creating a light texture with a controlled expansion, which means in some embodiments a chip surface without the presence of external bubbles and only with small and internal bubbles. These internal bubbles can decrease the density of the chip compared to potato crisps. In one embodiment, the fat content of the finished chip of this invention ranges from about 0 grams to about 11 grams per a 28 gram serving of chips. In one embodiment, the fat content of the chip is less than about 5g of fat per a 28 gram serving of chips This fat content represents an approximately 20 to 50% reduction in the fat content when compared to a chip processed under similar conditions but comprising potato flour, which is typically of 11 g per 28 g serving.

A finished product can have a density similar to potato and tortilla snacks, but with a more expanded texture and a faster melt down (as shown by the low water absorption index). The finished products can have a unique crispiness and eating quality that delivers the desired attributes from tortilla or potato snacks and a light crunch and milder flavor. The products can also have a more lubricious eating quality compared to typical rice snacks. The density of the finished products can range from about 0.3 to about 0.8 g/cc, or from about 0.35 to about 0.7 g/cc, or from about 0.4 to about 0.7, or from about 0.45 to about 0.55 g/cc, and all ranges therebetween. The density can be measured as disclosed herein.

The finished products can have high values of fracture strength, or hardness, with a light texture and lower fat content. The finished products can have fracture strength higher than potato snack products. They can have a fracture strength (grams force) from about 100 gf to about 900 gf, or from about 100 gf to about 750 gf, or from about 100 gf to about 600 gf, or from about 100 gf to about 300 gf, or from about 180 to about 280 gf, or from about 200 to about 250 gf, and all ranges therebetween.

## D. PRODUCT CHARACTERISTICS AND ANALYTICAL METHODS

### 1. WATER ABSORPTION INDEX (WAI)

#### Dry ingredients and Flour Blend:

In general, the terms "Water Absorption Index" and "WAI" refer to the measurement of the water-holding capacity of a carbohydrate based material as a result of a cooking process. (See e.g. R.A. Anderson et al., "Gelatinization of Corn Grits By Roll-and Extrusion-Cooking," 14(1):4 CEREAL SCIENCE TODAY (1969).) WAI of the chip describes how much water will take the chip to melt/dissolve, which is also an indirect measurement of the texture of the chip and eating quality. In this application, some embodiments of the snack product can have a high WAI, which correlates with a consistent product expansion, which can be described as products with small uniform bubbles inside of the chip. In one embodiment of semi-constrained frying, the use of rice flour with low WAI can result in random expansion, which can be described and products with surface bubbles of different sizes and depth. This random expansion can create a product that can be difficult to move through the fryer and to pack in uniform packages such as cans or trays.

In addition, the high WAI blends of this invention result in doughs that are easier to mill to a low thickness without mechanical damage to the mill rolls.

#### Measuring WAI for Finished Product

1. Grind 10 grams of the sample of finished product using a Cuisinart (Mini-Mate), to reduce the particle size of the sample.

2. Sieve the ground sample through a US# 20 sieve and weight 2 grams of this ground sample.

Follow the same steps from the method from sample preparation, hydration, measuring Supemate, including calculations as for dry materials.

#### References

American Association of Cereal Chemists, Eighth Edition, Method 561-20, "Hydration Capacity of Pre-gelatinized Cereal Products" First approval 4-4-68. Reviewed 10-27-82.

#### Principle

A sample with a fine particle size is hydrated and centrifuged so that the gelled portion separates from the liquid. The liquid containing the soluble starch is poured off, the gelled portion is weighed and expressed as an index of gel weight to original sample weight.

#### Scope

This test method covers the measurement of water retention of pre-gelatinized starches and cereal products that contain pre-gelatinized starches. It is intended to give a measurement of the amount of water which cannot be removed from thoroughly wetted samples solely by mechanical means as applied by centrifugal force.

Equipment/Reagents/Apparatus

| | |
|---|---|
| Centrifuge ALC (Apparecchi per Laboratori Chimici), model 4235 DiRuscio Associates, Manchester, Missouri Vel Laboratory Supplies, Louvain, Belgium 45° Fixed Angle Rotor | ALC, catalog number 5233 (6 sample holder) |
| Tube Carriers | ALC, catalog number 5011 (6 needed) |
| Tube Adapter | ALC, catalog number 5721 (6 needed) |
| Centrifuge tubes | VWR Cat. No.: 21010-818 (50 mL round bottom polypropylene tube, 105 mm x 28.5 mm) |
| Balance | Accurate to $\pm 0.01$g |
| Water bath | Must maintain constant temperature of 30°C ($\pm$ 1.0) |
| Thermometer | VWR Cat. No. 71740-188 |
| Small metal spatula | VWR Cat. No. 57949-022 |
| Polyethylene wash | bottle VWR Cat. No. 16651-987 |
| Test Tube Rack | VWR Cat. No. 60917-512 |
| Beaker | VWR Cat. No. 13910-201 (250 mL) |
| Timer | VWR Cat. No. 62344-586 |
| Water | Distilled and deionized |

Procedure

Sample Preparation:

(Note: The centrifuge is capable of analyzing a maximum of 6 samples simultaneously. This maximum sample load represents 3 analyses performed in duplicate.)

1. Shake the sample until it is homogeneous.

2. Using a felt tip marker, draw a horizontal line 18 mm below the top edge of each centrifuge tube.

3. Using a felt tip marker, label a desired number of clean, dry 50 mL centrifuge tubes.

4. Record the number and weight of the centrifuge tubes to the nearest 0.01 decimal place. (Note: Use centrifuge tubes that are approximately the same weight.)

5. Weigh 2 $\pm$ 0.05 g of the raw material into the labeled centrifuge tube.

6. Record the weight of the added sample.

7. Analyze each sample in duplicate.

8. Repeat Steps 4-7 for each sample.

9.

Sample hydration:

1. Add 30 mL of 30°C distilled water to each centrifuge tube.
2. Using a small metal spatula, gently stir the mixture 30 times to homogeneously hydrate the sample. (CAUTION:

Vigorous stirring will cause spillage, and the sample must be repeated.)

3. Before removing the stir rod, rinse it with 30°C distilled water to minimize the amount of sample removed. Also, adequately rinse the side walls of the test tubes.

4. Repeat steps 2-3 for each sample.

5. Place the centrifuge tubes (6 maximum) into a 30°C (86°F $\pm$ 2°) distilled water bath for 30 minutes. Repeat the stirring procedure at 10, 20 and 30 minute intervals as described below:

Stirring Frequency

| Time | Number of stirs |
|---|---|
| Beginning of analysis | 30 |
| After 10 minutes | 20 |
| After 20 minutes | 15 |
| After 30 minutes | 10 |

6. After heating samples for 30 minutes, remove the centrifuge tubes from the water bath. Dry each tube with a paper towel and insert them into a test tube rack.

7. Add water to the fill line.

Centrifugation:

1. Use the following equation to calculate the angular speed (RPM) required to produce a gravitational force F = 1257g:

$$n = (1.125 \times 10^9 + r)^{1/2}$$

n = rpm
r = radial distance from the center of rotation to the end of the sample tube (mm)

Example:

$$n = (1.125 \times 10^9 \ 115)^{1/2}$$

n= 3127 = 3130 RMP

NOTE: The calculated RPM should be used as a starting point to verify the instrument. Using a well characterized raw material and data from a verified instrument, the RPM may require further adjustment to provide the sameresults as a previously verified centrifuge.

2. Adjust the RPM setting to the calculated angular speed.

3. Transfer the tubes to the centrifuge. (Note: An even number of samples must be analyzed to balance the sample load.)

4. Centrifuge the tubes for 15 minutes at the calculated angular speed.

5. After 15 minutes, allow centrifuge to coast to a complete stop. (CAUTION: Braking the centrifuge will lead to erroneous results.)

6.

Measuring the Supernate:

1. Immediately remove the centrifuge tubes from the centrifuge and quickly decant the supernatant from each tube. It should be noted that if the gel pellet is inadvertently disturbed or removed, the analysis must be repeated.

2. Accurately weigh and record the weight of the tube and contents to $\pm$ 0.01.

Calculations

$$\text{Water absorption index (WAI)} = \frac{\text{(weight of gel + weight of tube) - weight of tube}}{\text{sample weight}}$$

Each mass is measured by ± 0.01g. Record each WAI value, the average of the triplicate sample, and the standard deviation.

2. RHEOLOGICAL PROPERTIES USING THE RAPID VISCO ANALYZER (RVA)

References

Applications Manual for the Rapid Visco Analyser, Version 1, Newport Scientific, 1998.
American Association of Cereal Chemists (AACC), 1995. Determination of the pasting properties of rice with the Rapid Visco-Analyser. AACC Method 61-02, First Approval 10-26-94, Approved Methods of Analysis, 9th Edition, Amer. Assoc. Cereal. Chem., St. Paul .MN.

Principle

The Rapid Visco Analyzer (RVA) measures the viscosity profile of a sample undergoing a thermal cycle. As the temperature of a granular starch sample such as Masa increases, the granules absorb water and swell to many times their original size. Swelling of the starch is accompanied by an increase in the sample viscosity. The viscosity behavior as a function of temperature is characteristic of the material and often correlates with the starch's degree of cook.
A sample of known moisture level is mixed in water and the viscosity profile is measured as a function of a temperature program. The output of the RVA is a viscosity-time curve. The RVA results for peak viscosity, final viscosity, and pasting temperature are recorded for each sample. Samples must be analyzed in duplicate and the results averaged.

Equipment

| | |
|---|---|
| RVA, Newport Scientific | RVA model 4, Foss North America, Part #0000ARVA40, Software version 2.2 |
| RVA canisters and paddles | Foss North America, Part #8100691 |
| Distilled water | |
| Small spatula | VWR Cat. No. 57952-253 or equivalent |
| Pipets | VWR Cat. No. 14670-205 or equivalent |
| Balance | Two place balance or equivalent |
| Cork, number 8 or larger | VWR Cat. No. 59580-342 or equivalent |
| Weigh paper | VWR Cat. No. 12578-165 or equivalent |

RVA Conditions

The RVA temperature profile is as follows:

PROFILE

| Time | Type | Value |
|---|---|---|
| 00:00:00 | Temp | 50.°C |
| 00:00:00 | Speed | 960 rpm |
| 00:00:10 | Speed | 160 rpm |
| 00:01:00 | Temp | 50 °C |
| 00:04:42 | Temp | 95 °C |

(continued)

| Time | Type | Value |
|------|------|-------|
| 00:07:12 | Temp | 95 °C |
| 00:11:00 | Temp | 50 °C |
| 00:13:00 | End Temp | 50 °C |

Sample Weight Determination

Sample and water weights should be corrected for the sample moisture content to give a constant dry weight. The sample moisture content must be determined by either Oven Moisture Standard Method or Mettler Moisture Method (10 g, 120 °C, 10 minutes).

The following formulas are used to determine the corrected sample mass (S) and correct water mass (W) for each sample.

$$S = \frac{28*C}{(100-M)} \qquad W = 28 - S$$

where S = corrected starch weight (g)

C = dry starch concentration (%)

M = actual moisture content of the starch (%)

W = corrected water weight (g)

Use these formulae to determine the amount of sample (S) and water (W) to weigh for the analysis.

Sample Preparation

1. Determine the amount of water (W) and sample (S) needed to run the analysis using the Sample Weight Determination section above.

2. Weigh the desired amount of water in a clean canister to the nearest 0.01g.

3. Mix the sample to ensure homogeneity. Weigh the desired amount of sample on a weigh paper to the nearest 0.01g. (Note: It is critical that the correct amount of sample to be weighed to minimize method error.)

4. Carefully pour the sample into the canister leaving no sample remaining on the weigh paper. Once the sample enters the water, the analysis must be performed within 40 seconds.

5. Place a clean, dry cork over the canister and shake vigorously by hand for 10 seconds.

6. Carefully slide stopper off canister and transfer all sample and water from the cork into the canister and then quickly scrape sample down canister walls with paddle blade. (Note: It is critical that the entire sample be transferred into the canister to minimize method error.)

7. Place paddle in the canister, fix paddle on RVA, center base of canister over heating chamber, and lower tower to start the test.

8. After the analysis, the tower will pop up. Press "Yes" to add this test to the Current Analysis Session. Remove the paddle and canister and discard. Note: the RVA canisters and paddle may only be used up to three times if thoroughly washed and dried between uses.

9. To run the next sample, repeat this process starting with step 4 under RVA preparation:

10.

Data Analysis

From the graph of paste viscosity versus time read the maximum viscosity obtained during the heating and holding cycles of the Standard Profile (standard method). The maximum viscosity is the sample Peak Viscosity.
From the graph of paste viscosity versus time read the viscosity obtained at the end of the test after cooling. Said viscosity is the final viscosity.

3. % AMYLOSE

Amylose content of Milled Rice is determined according to AACC Method 61-03, page 1-4.

4. CHIP DENSITY TEST PROCEDURE

The density of snacks can be related to the texture and eating quality of the snacks. The lower the density of the product the lighter texture and eating quality the product is. Low density products, such as extruded snacks, can have a slow melting eating quality and some level of tooth-packing. Products like potato and tortilla snacks have a high density, with the characteristic crunchy texture and fast melting eating quality. Density can be determined as follows.

Density Measurement

Equipment

1. Graduated cylinder having an open end that is sufficiently large to accommodate unbroken snack pieces.

2. Balance.

3. Glycerin (P&G Chemicals, Cincinnati, OH).

Procedure

1. Tare the graduated cylinder.

2. Fill the graduated cylinder to the upper most graduation mark with glycerin. Insure that the filled graduated cylinder does not contain air bubbles.

3. Weigh the glycerin filled graduated cylinder and record the mass of the glycerin filled graduated cylinder to the nearest one hundredth of a gram. This is the mass of glycerin in the graduated cylinder = $m_{Glycerin}$

4. Empty the glycerin from graduated cylinder and clean the emptied graduated cylinder.

5. Tare the clean graduated cylinder from Step 4 above.

6. Place approximately 20 grams of unbroken test product in the graduated cylinder.

7. Weigh the graduated cylinder containing the test product and record the mass of the graduated cylinder containing the test product to the nearest one hundredth of a gram. This is the mass of the test product in the graduated cylinder = $m_{test\ product}$

8. Fill the graduated cylinder containing the test product to the upper most graduation mark with glycerin. Insure that the filled graduated cylinder does not contain air bubbles.

9. Within 5 minutes of performing Step 8 above, weigh the graduated cylinder containing the test product and glycerin and record the mass of the graduated cylinder containing the test product and glycerin to the nearest one hundredth of a gram. This mass is the mass of the test product and glycerin in the graduated cylinder = $m_{test\ product\ +\ glycerin}$

10. Empty and clean the graduated cylinder from Step 9.

11. Repeat Steps 1 through 10 above, using fresh glycerin and test product, two additional times to obtain a total of three measurements per sample.

12. Average the three sample measurements to yield:

- average $m_{1\ glycerin}$
- average $m_{test\ product}$
- average $m_{test\ product\ +\ glycerin}$
-

Calculations

$$\rho_{glycerin} = 1.2613\ gm/mL \qquad \text{(Density of glycerin, literature value)}$$

$$average V_{1\ glycerin} = (average\ m_{1\ glycerin}) / (\rho_{glycerin}) = volume\ of\ the\ cylinder$$

$$average\ m_{2\ glycerin} = average\ m_{test\ product\ +\ glycerin} - average\ m_{test\ product}$$

$$average V_{2\ glycerin} = (average\ m_{2\ glycerin}) / (\rho_{glycerin})$$

$$average\ V_{test\ product} = average V_{1\ glycerin} - average V_{2\ glycerin}$$

$$SV_{test\ product} = (average\ V_{test\ product}) / (average\ m_{test\ product})$$

$$\rho_{test\ product} = 1/ SV_{test\ product}$$

## 5. % FAT ANALYSIS

The percent of total fat in a chip can be measured by standard procedures known to those in the food arts. The total fat can be measured by acid hydrolysis.. Specifically, the method for measuring total fat by acid hydrolysis can be found in AOAC International (2000) 17th edition AOAC International, Gaithersburg, MD, USA, Official Methods 922.06, 954.02.

## 6. CHIP FRACTURE STRENGTH/HARDNESS

Fracture Strength, or hardness, is the measurement of the force required to break a chip. The fracture strength relates to the strength of the snack and the eating quality. The higher the fracture strength, the higher the crunchiness and crispiness of the chip.
Fracture strength can be measured by the following method.
A three-pin tripod base is attached to the base of the Texture Analyzer (TA). A cylindrical probe is attached to the force arm of the TA. A test chip is positioned equidistantly on the tripod base. The tripod base allows chips to be fully supported, eliminating any rocking or lost motion when analyzed. The force arm descends bringing the cylindrical probe and chip into contact; force is applied to the chip until a break is registered. The force arm then returns to its original position.

Analytical Instrument:

TA-XT2i Texture Analyzer
Model: Plus-Upgrade
Texture Technologies Corp.
18 Fairview Road
Scarsdale, NY 10583-2136

The dimensions for the tripod base and probe can be found hereinafter.

Procedure:

This method serves to set the specific variables used in determining chip fracture and more specifically, chip hardness. A pre-requisite is that the analyst is trained in the general use of a Texture Analyzer, its related software, and adept in setting up a project/program. Training is available through Texture Technologies Corp.

Set-up:

• Attach the Tripod base to the base of the TA using the knobbed screws.
• Attach the' inch cylindrical probe to the force arm.
• Calibrate the T.A.: Select "T.A." from the upper most tool bar

- Move the cursor to "Calibrate"

  • Click "Calibrate Force"

    ▪ Select "User"
    ▪ Click Next
    ▪ Enter 2000g Calibration Weight
    ▪ Place 2000g Calibration Weight on the Calibration Platform on top of the force arm

    • Use the glove when handling the weight
    • Allow 5 - 10 sec for instrument to equilibrate with the weight
    • Click Next
    • Click Finished
    • Click OK

• Enter TA sequence information: Click on the Project Tab
- Click TA Settings
- Enter the following TA sequence information:

| Sequence Title | Return to Start | |
|---|---|---|
| Test Mode | 1 = Compression | Defines the initial probe direction and force Polarity |
| Pre Test Speed | 0.33333mm/sec (20.0mm/min) | Speed while searching for the trigger point |
| Test Speed | 0.08333mm/sec (5.0mm/min) | Speed of approach to target (after triggering) |
| Post Test Speed | 0.83333mm/sec (50.0mm/min) | Speed at which the probe returns to the start point. |
| Target Mode | 0 = Distance | Select Distance, Strain or Force as the target Parameter |
| Distance | 3.000mm | Target distance/deformation |
| Trigger Type | Auto (Force) | How the initiation of data capture is defined |
| Trigger Force | 5.0 g | Amount of force for the TA to initiate data capture (normally when product is detected) |

(continued)

| Sequence Title | Return to Start | |
| --- | --- | --- |
| Break Mode | Level | If and how the TA detects when the product has broken. |
| Break Sensitivity | 5.0 g | Sensitivity of the break detect mechanism |
| Break Detect | Return | Action taken when a product break is detected. |
| Stop Plot At | Start Position | Determines at which point data capture is switched off. |
| Tare Mode | Auto | Determines when the force is zeroed. |
| Advanced Options | On | Determines if advanced options are displayed. |
| Control Oven | Disabled | |
| Frame Deflection | Off | |

• Enter sample Identification

o Click "Test Configuration"

■ Enter File Id (Sample Information, Lab Notebook, Date, etc.)
■ Enter File Number (If first enter 1, if continuing a test from an earlier run enter the subsequent file number.)
■ Click "Auto Save" box
■ Click the arrow box to the right of the menu to select the location and folder for the saved file(s)
■ Enter title information for the test
■ If the Batch is the same as the File ID check "Use File ID". If the Batch is different from File ID uncheck "Use File ID" and enter Batch information
■ Click "Apply"
■ Click "OK"

Running Samples:

• Use the up arrows on the front panel of the TA to move the force arm up to a comfortable height in order to place the chip onto the tripod.

• Place the chip centrally on the pins of the tripod.

• Reposition the force arm to approximately -3 - 5mm above the surface of the chip

- The probe height above the sample does not have to perfectly calibrated as the test is designed so that the instrument does not begin recording data until the probe contacts the sample and the trigger force is reached. The probe will return to the original start position above the sample at the conclusion of each test.

• Select "T.A." from the upper most tool bar

- Click Run Test
- Verify Information and File Number
- Click Run Test
- Further samples to be included in this batch of testing can be signaled to run using the command "Crtl+Q"

• Run a total of 10 chip samples.

Analyzing the data:

• Determine the maximum peak break force of each sample. Note: A macro can be written using the software to facilitate obtaining the data.

• A Q-test analysis is applied to the dataset, to determine whether any data outliers exist at a 90% confidence level, and if so, one observation can be removed from the analysis.

Theory on Outliers and the Q-Test:

In a set of replicate measurements of a physical or chemical quantity, one or more of the obtained values may differ considerably from the majority of the rest. In this case, a strong motivation can exist to eliminate those deviant values and not to include them in any subsequent calculation (e.g. of the mean value and/or of the standard deviation). It is permitted only if the suspect values can be "legitimately" characterized as outliers. Usually, an outlier is defined as an observation that is generated from a different model or a different distribution than was the main "body" of data. Although this definition implies
that an outlier may be found anywhere within the range of observations, it is natural to suspect and examine as possible outliers only the extreme values. The rejection of suspect observations must be based exclusively on an objective criterion and not on subjective or intuitive grounds. Such can be achieved by using statistically sound tests for "the detection of outliers".

The Dixon's Q-test is the simpler test of this type and it is usually the only one described in textbooks of Analytical Chemistry in the chapters of data treatment. This test allows examination if one (and only one) observation from a small set of replicate observations (typically 3 to 10) can be "legitimately" rejected or not.

Q-test is based on the statistical distribution of "sub range ratios" of ordered data samples, drawn from the same normal population. Hence, a normal (Gaussian) distribution of data is assumed whenever this test is applied. In case of the detection and rejection of an outlier, Q-test cannot be reapplied on the set of the remaining observations.

How the Q-test is applied

An example of how it is applied is as follows:

(1) The N values comprising the set of observations under examination are arranged in ascending order:

$$x_1 < x_2 < \ldots < x_N$$

(2) The statistic experimental Q-value ($Q_{exp}$) is calculated. This value is a ratio defined as the difference of the suspect value from its nearest one divided by the range of the values (Q: rejection quotient). Thus, for testing $x_1$ or $x_N$ (as possible outliers) we use the following $Q_{exp}$ values:

$$Q_{exp} = \frac{X_2 - X_1}{X_N - X_1} \qquad\qquad Q_{exp} = \frac{X_N - X_{N-1}}{X_N - X_1}$$

(3) The obtained $Q_{exp}$ value is compared to a critical Q-value ($Q_{crit}$) found in tables. This critical value should correspond to the confidence level (CL) decided to run the test (usually: CL=95%).

(4) If $Q_{exp} > Q_{crit}$, then the suspect value can be characterized as an outlier and it can be rejected, if not, the suspect value must be retained and used in all subsequent calculations.

The null hypothesis associated to Q-test is as follows: "There is no a significant difference between the suspect value and the rest of them, any differences must be exclusively attributed to random errors".
A table containing the critical Q values for CL 90%, 95% and 99% and N=3-10 is given below [from: D.B. Rorabacher, Anal. Chem. 63 (1991) 139*]*

Table of critical values of Q

| N | $Q_{crit}$ (CL90%) | $Q_{crit}$ (CL95%) | $Q_{crit}$ (CL:99%) |
|---|---|---|---|
| 3 | 0.941 | 0.970 | 0.994 |
| 4 | 0.765 | 0.829 | 0.926 |
| 5 | 0.642 | 0.710 | 0.821 |
| 6 | 0.560 | 0.625 | 0.740 |

(continued)

| N | $Q_{crit}$ (CL90%) | $Q_{crit}$ (CL95%) | $Q_{crit}$ (CL:99%) |
|---|---|---|---|
| 7 | 0.507 | 0.568 | 0.680 |
| 8 | 0.468 | 0.526 | 0.634 |
| 9 | 0.437 | 0.493 | 0.598 |
| 10 | 0.412 | 0.466 | 0.568 |

Typical example:

The following replicate observations were obtained during a measurement and they are arranged in ascending order:

4.85, 6.18, 6.28, 6.49, 6.69.

These values can be represented by the following dotplot:

Can we reject observation 4.85 as an outlier at a 95% confidence level?

Answer: The corresponding $Q_{exp}$ value is: $Q_{exp}$ = (6.18 - 4.85) / (6.69 - 4.85) = 0.722. $Q_{exp}$ is greater than $Q_{crit}$ value (=0.710, at CL:95% for N=5). Therefore, we can reject 4.85 and being certain that the probability ($p$) of erroneous rejection of the null hypothesis (type 1 error) is less than 0.05.

Note: At confidence level 99%, the suspect observation cannot be rejected, hence the probability of erroneous rejection is greater than 0.01.

Data Results:

- Following application of the Q-Test, remaining observations are averaged and recorded as the samples chip fracture force in gf (gram force).

7. SHEET STRENGTH TEST

The tensile test is a mechanical stress-strain test measuring the tensile strength of a dough sheet. A dough strip is mounted by its ends onto the testing machine. The dough strip is elongated at a constant rate until the strip breaks. The force (g) at which the strip breaks is the tensile strength of the dough. The output of the tensile test is recorded as force/load versus distance/time. The sheet strength can be measured by the following method.

Equipment

4. Stable Micro Systems Texture Analyzer TA-XT2 or TA-XT2i with 25 kg load cell capacity with Texture Expert Exceed Software and a 5 kg calibration weight.

5. Instron Elastomeric Grips (Catalog # 2713-001), having the following replacement parts:

a. Internal springs (Instron Part No. 66-1-50) replaced with springs made from 0.5842 mm diameter wire. The replacement springs must be 3.81 cm long, have an inside diameter of 0.635 cm, and a K factor of 0.228 N/mm. Said replacement Springs can be obtained from the Jones Spring Company of Wilder, Kentucky U.S.A.; and

b. Instron Part No. T2-322 is replaced, as shown in Figures 8 and 9, by a modified roller plain. Said modified roller plain is an Instron Stock Part No. T2-322 that has been machined to have a flat side 4.412 cm long and 0.9525 cm wide on said roller plain's outer surface. Said flat side is covered with Armstrong Self-adhereing Tape # Tap18230 and is positioned parallel to the sample side of the Grip's Clamp Frame Lower (Instron Part No. A2-1030). The InstronElastomeric Grips are fixed on the top and bottom of the Texture Analyzer.

Sample Preparation

1. Collect a dough sheet having a uniform thickness ranging from 0.38 mm to 2.50 mm, and a length of at least 20 cm.

2. Cut samples from the dough sheet to form dough strips that are 2.5 cm wide and 15 cm long. The strips' 15 cm length should correspond to the dough's machine direction. Cut all of the strips sequentially.

3. Protect the samples from moisture loss by placing the samples in an air-tight container. The samples must be analyzed within 10 minutes of collection to ensure that the samples are analyzed fresh.

Texture Analyzer Settings

| | |
|---|---|
| Test Mode: | Measure Force in Tension |
| Option: | Return to Start |
| Pre-test speed: | 3.0 mm/s |
| Test speed: | 10 mm/s |
| Post test speed: | 10 mm/s |
| Distance: | 45 mm |
| Trigger Type: | Auto |
| Trigger Force: | 5 g |
| Units: | grams |
| Distance: | millimeters |
| Break Detect: | Off |

Data Analysis

The sheet tensile strength for a sample is the maximum force before a sample breaks. A dough's sheet tensile strength is the average of five sample sheet strengths.

E. EXAMPLES (non-claimed)

EXAMPLES 1, 2,

The following examples illustrate physical properties of rice flour compositions.

Table 1

| Rice Flour Compositions and Their Physical Properties | | |
|---|---|---|
| Rice flour composition | Example 1 | Example 2 |
| WAI of pregel rice | 4.1 | 6.9 |
| Peak Viscosity (RVU) of pregel rice | 37 | 189 |
| Acetylated Rice Starch Material Remygel 663 (Remy) 1.2% | 10% | 10% |
| Rice flour Pregel RF BKK | 0% | 40% |
| Parboiled rice flour (Boost) | 40% | 0% |

(continued)

| Rice Flour Compositions and Their Physical Properties | | |
|---|---|---|
| Rice flour composition | Example 1 | Example 2 |
| Maltodextrin DE 18 (Grain | 4% | 4% |
| Potato Flakes (Winnemuca Farms) | 28% | 28% |
| Product Hardness (gf) | 576 | 666 |
| Stack Height* (mm) | 115 | 95 |
| Sheet Strength | 259 | 312 |
| *Height (mm) of 40 chips stacked vertically | | |

Dough compositions are prepared from the dry blends set forth in the Table 1. The dough compositions of Examples 1 and 2 comprise 65% dry blend and 35% added water. All ingredients are blended in a Turbulizer® mixer to form a loose, dry dough. Example 1 represents a rice flour composition using previously known rice flours, while Example 2 uses rice flour compositions in accordance with embodiments of the present disclosure.

The dough is sheeted by continuously feeding it through a pair of sheeting rolls forming an elastic continuous sheet without pin holes. Sheet thickness is controlled to about 0.02 inches (0.05 cm). The back roll is heated to about 90°F (32°C) and the front roll is heated to about 135°F (57°C).

The dough sheet is then cut into oval shaped pieces and fried in a semi-constrained frying mold at about 400°F (204°C) for about 8 seconds, or until desired doneness is achieved. The fried pieces contain about 20-25% fat. As shown in Table 1, Example 1 uses a pre-gelatinized rice flour composition having a WAI of 4.1 and Peak Viscosity of 37 RVU, while Example 2 uses a pre-gelatinized rice flour composition having a WAI of 6.9 and a Peak Viscosity of 189 RVU.

These products have a crisp texture, fast mouth-melt and neutral flavor.

EXAMPLES 3, 4, 5

Dough compositions are prepared from the dry blends of Examples 3, 4, and 5 set forth in the Table 2 below. The dough compositions comprise 65% dry blend and 35% added water. All ingredients are blended in a continuous Exact or mixer of similar design to form loose, dry dough. Example 3 represents a rice flour composition using previously known rice flours, while Examples 4 and 5 uses rice flour compositions in accordance with embodiments of the present disclosure.

The dough is sheeted by continuously feeding it through a pair of sheeting rolls forming an elastic continuous sheet without pin holes. Sheet thickness is controlled to about 0.025 inches (0.064 cm). The back roll is heated to about 64°F (18°C) and the front roll is heated to about 52°F (11°C).

The dough sheet is then cut into oval shaped pieces and fried in a constrained frying mold at about 338°F (170°C) for about 20 seconds, or until desired doneness is achieved. The frying oil is RBD palm-olein. The fried pieces contain about 25-30% fat.

These products have a crisp texture, fast mouth-melt and clean flavor.

Table 2

| Dry Blends Comprising Rice Flour Compositions | | | |
|---|---|---|---|
| Ingredients (% dry blend) | Example 3 | Example 4 | Example 5 |
| Pre-gel rice flour (BKK) | 0 | 20 (WAI = 6.0; Peak Viscosity = 185) | 35 (WAI = 6.0; Peak Viscosity = 185) |
| Parboiled rice flour (Boost) | 4 (WAI = 3.5; Peak Viscosity 32) | 0 | 0 |
| Potato Flakes (Emsland) | 72 | 65 | 50 |
| Wheat starch (Roquette) | 13 | 13 | 13 |
| Pre-gel Corn Meal (Codrico) | 9 | 0 | 0 |

(continued)

| Dry Blends Comprising Rice Flour Compositions | | |
|---|---|---|
| Ingredients (% dry blend) | Example 3 | Example 4 | Example 5 |
| Maltodextrin DE 21 (Roquette) | 2 | 2 | 2 |

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

**Claims**

1. A dry blend for making a fabricated snack product, wherein said dry blend comprises from 15% to 100% of a rice flour composition consisting of 100% pre-gelatinized rice flour and having

   a) a Water Absorption Index of from 6.0 to 7.5 and
   b) a Peak Viscosity of from 350 RVU to 500 RVU.

2. The dry blend of claim 1, wherein said rice flour is selected from the group consisting of medium grain rice flour, long grain rice flour, and mixtures thereof.

3. The dry blend of claim 1 or 2, wherein the dry blend further comprises other starch materials at from 0% to 85%.

4. The dry blend of any of the preceding claims, wherein the other starch materials comprise potato flakes.

5. The dry blend of any of the preceding claims, wherein the other starch materials further comprise a material selected from the group consisting of starches, acetylated rice, corn, tapioca, and combinations and mixtures thereof.

6. The dry blend of any of the preceding claims, further comprising from 0% to 20% by weight, maltodextrin.

7. A dough comprising:

   a) from 50% to 85% of the dry blend of any of the preceding claims, and
   b) from 15% to 50% added water.

**Patentansprüche**

1. Trockenmischung zur Herstellung eines gefertigten Snackprodukts, wobei die Trockenmischung 15 % bis 100 % einer Reismehlzusammensetzung umfasst, die aus 100 % vorgelatiniertem Reismehl besteht und

   a) einen Wasserabsorptionsindex von 6,0 bis 7,5 und
   b) eine Spitzenviskosität von 350 RVU bis 500 RVU
   aufweist.

2. Trockenmischung nach Anspruch 1, wobei das Reismehl ausgewählt ist aus der Gruppe bestehend aus Mittelkornreismehl, Langkornreismehl und Gemischen davon.

3. Trockenmischung nach Anspruch 1 oder 2, wobei die Trockenmischung ferner 0 % bis 85 % anderer Stärkematerialien umfasst.

4. Trockenmischung nach einem der vorhergehenden Ansprüche, wobei die anderen Stärkematerialien Kartoffelflocken umfassen.

**5.** Trockenmischung nach einem der vorhergehenden Ansprüche, wobei die anderen Stärkematerialien ferner ein Material umfassen, das ausgewählt ist aus der Gruppe bestehend aus Stärken, acetyliertem Reis, Mais, Tapioka, und Kombinationen und Gemischen davon.

**6.** Trockenmischung nach einem der vorhergehenden Ansprüche, ferner umfassend von 0 Gew.-% bis 20 Gew.-% Maltodextrin.

**7.** Teig, umfassend:

a) von 50 % bis 85 % der Trockenmischung nach einem der vorhergehenden Ansprüche, und
b) von 15 % bis 50 % zugegebenes Wasser.

**Revendications**

**1.** Mélange sec pour constituer un produit de collation fabriqué, dans lequel ledit mélange sec comprend de 15 % à 100 % d'une composition de farine de riz constituée de 100 % de farine de riz prégélatinisée et ayant

a) un indice d'absorption d'eau de 6,0 à 7,5 et
b) un pic de viscosité de 350 RVU à 500 RVU.

**2.** Mélange sec selon la revendication 1, dans lequel ladite farine de riz est sélectionnée dans le groupe constitué par de la farine de riz de grain moyen, de la farine de riz long grain, et des mélanges de celles-ci.

**3.** Mélange sec selon la revendication 1 ou 2, dans lequel le mélange sec comprend en outre d'autres matières d'amidon à hauteur de 0 % à 85 %.

**4.** Mélange sec selon l'une quelconque des revendications précédentes, dans lequel les autres matières d'amidon comprennent des flocons de pomme de terre.

**5.** Mélange sec selon l'une quelconque des revendications précédentes, dans lequel les autres matières d'amidon comprennent en outre une matière sélectionnée dans le groupe constitué par les amidons, le riz acétylé, le maïs, le tapioca et des combinaisons et mélanges de ceux-ci.

**6.** Mélange sec selon l'une quelconque des revendications précédentes, comprenant en outre de 0 % à 20 % en poids de maltodextrine.

**7.** Pâte comprenant :

a) de 50 % à 85 % du mélange sec selon l'une quelconque des revendications précédentes, et
b) de 15 % à 50 % d'eau ajoutée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050053715 A
- US 20060286271 A
- US 5085884 A, Young
- US 5422131 A, Elsen
- US 6558730 B, Gizaw
- US 9507610 W
- WO 9601572 A
- US 3626466 A, Liepa

**Non-patent literature cited in the description**

- **R.A. ANDERSON et al.** Gelatinization of Corn Grits By Roll-and Extrusion-Cooking. *CEREAL SCIENCE TODAY,* 1969, vol. 14 (1), 4
- Hydration Capacity of Pre-gelatinized Cereal Products. Method 561-20. American Association of Cereal Chemists
- Applications Manual for the Rapid Visco Analyser. Newport Scientific, 1998
- Determination of the pasting properties of rice with the Rapid Visco-Analyser. AACC Method 61-02, First Approval 10-26-94, Approved Methods of Analysis. American Association of Cereal Chemists (AACC), 1995
- Official Methods 922.06, 954.02. AOAC International, 2000
- **D.B. RORABACHER.** *Anal. Chem.,* 1991, vol. 63, 139